# EUROPEAN PATENT APPLICATION

(11) **EP 4 557 553 A1**
(43) Date of publication of application: **21.05.2025**
(21) Application number: 24213042.5
(22) Date of filing: 14.11.2024
(51) Int. Cl.: H02J 1/10, H02J 3/38

(54) **POWER CONVERSION SYSTEM AND POWER UPDATE CONTROL METHOD**

(30) Priority: 14.11.2023 CN 202311521862
(71) Applicant: Huawei Digital Power Technologies Co., Ltd., Shenzhen, Guangdong 518043 (CN)
(72) Inventor: Qu, Zisen, Shenzhen, 518043 (CN); Zhao, Mingquan, Shenzhen, 518043 (CN); Zhang, Meiqing, Shenzhen, 518043 (CN); Xin, Kai, Shenzhen, 518043 (CN); Liu, Yunfeng, Shenzhen, 518043 (CN)
(74) Representative: Gill Jennings & Every LLP

(57) **Abstract**

This application discloses a power conversion system and a power update control method. The power conversion system includes N power conversion units and a control unit. The control unit can control, in a control periodicity, operating modes of one or more target power conversion units in the N power conversion units to be switched between a power reserve PR mode and a maximum power point tracking MPPT mode, and update a reference power based on a maximum power obtained in the MPPT mode, for an operating power of the target power conversion unit obtained in the PR mode to be an updated reference power, and the updated reference power is less than or equal to the maximum power. In addition, the control unit further controls an operating mode of a power conversion unit other than the target power conversion unit in the N power conversion units to remain unchanged, so that the power conversion unit other than the target power conversion unit does not perform mode switching. In this way, fluctuation of a total output power and an output voltage of the power conversion unit is reduced.

## Description

### TECHNICAL FIELD

This application relates to the field of power electronics technologies, and in particular, to a power conversion system and a power update control method.

### BACKGROUND

A power supply system is a new power generation system that uses photovoltaic effect of a photovoltaic module to convert solar radiation energy into electric energy. A power converter is a core component in the power supply system, and is mainly responsible for converting a direct current generated by the photovoltaic module into an alternating current, and outputting the alternating current to a power grid. An inverter generally includes a power conversion unit. The power conversion unit is controlled to operate in a maximum power point tracking (MPPT) mode, to track a maximum power of the photovoltaic module, so that the power supply system operates at a maximum power point in real time.

In actual application, a voltage amplitude, a frequency, and a phase on the power grid dynamically fluctuate, and the power conversion unit operates in the MPPT mode. As a result, when the power grid is in a dynamic fluctuation period, the power supply system cannot freely adjust a power for supporting (the power can only be decreased, but cannot be increased). Based on this, power reserve (PR) is performed on an output power of the photovoltaic module, that is, the power conversion unit is controlled to operate in a PR mode, so that the output power of the photovoltaic module is lower than the maximum power. In this way, when the voltage amplitude, the frequency, and the phase on the power grid are in the dynamic fluctuation period, the power supply system can have an output capability of increasing the power and decreasing the power based on a reserved power, to meet a requirement of the power grid. In addition, when operating in the PR mode, the power conversion unit further needs to depend on the MPPT mode to detect the maximum power of the photovoltaic module. As a result, the power conversion unit needs to switch between the PR mode and the MPPT mode, resulting in fluctuation of a total output power and an output voltage of the power conversion unit, and the like. This endangers stability and control precision of the power supply system, and even increases mechanical stress, thermal stress, and the like of a device.

### SUMMARY

Embodiments of this application provide a power conversion system and a power update control method, to accurately update an operating power of a power conversion unit in a PR mode in time through maximum power tracking, and reduce fluctuation of an output power and an output voltage of the power conversion unit.

According to a first aspect, an embodiment of this application provides a power conversion system. The power conversion system includes N power conversion units and a control unit, and N is an integer and N≥2. A first terminal of each power conversion unit is configured to connect to a direct current power supply or an alternating current power supply, and a second terminal of each power conversion unit is configured to connect to a load, an energy storage unit, a power generation unit, or a power grid. The power conversion unit is configured to: perform conversion on a direct current input by the direct current power supply or an alternating current input by the alternating current power supply, and then output a current obtained through the conversion. In addition, the control unit can control, in a control periodicity, operating modes of one or more target power conversion units in the N power conversion units to be switched between a PR mode and a MPPT mode. After the operating mode of the target power conversion unit is switched to the MPPT mode, a maximum power can be obtained in the MPPT mode. Therefore, a reference power can be updated based on the maximum power obtained in the MPPT mode, to obtain an updated reference power, so that the operating power of the target power conversion unit obtained after switching from the MPPT mode to the PR mode can change to the updated reference power, and the updated reference power is less than or equal to the maximum power. In the control periodicity, the control unit can further control an operating mode of a power conversion unit other than the target power conversion unit in the N power conversion units to remain unchanged, so that the power conversion unit other than the target power conversion unit does not perform mode switching. In this way, in the N power conversion units, a part of the power conversion units may be enabled to perform mode switching between the PR mode and the MPPT mode, and a remaining power conversion unit does not perform mode switching. In comparison with a case in which all the N power conversion units perform mode switching between the PR mode and the MPPT mode, fluctuation of a total output power and an output voltage of the power conversion unit can be reduced, and stability and control precision of the power supply system can be improved.

In addition, according to the foregoing embodiment, mechanical stress, thermal stress, and the like of a device in the power conversion system can be further reduced, and overall stability of the power conversion system can be improved.

In this application, the target power conversion unit may be randomly selected. Specifically, in one or more control periodicities in a plurality of consecutive control periodicities, one or more power conversion units are randomly selected from the N power conversion units as the target power conversion units. In this way, the target power conversion unit can be selected in a random selection manner.

In this application, a probability of selecting at least a part of the power conversion units as the target power conversion unit is different. For example, probabilities of selecting all the power conversion units as the target power conversion units may be different, or a probability of selecting a part of the power conversion units as the target power conversion unit may be different, and a probability of selecting a remaining power conversion unit as the target power conversion unit may be the same.

In some examples, when the target power conversion unit is randomly selected, a probability of selecting each power conversion unit as the target power conversion unit is the same. In this way, the power conversion unit may be randomly selected as the target power conversion unit at a same probability. Further, in each control periodicity, the power conversion unit is randomly selected as the target power conversion unit at the same probability.

In still some examples, when the target power conversion unit is randomly selected, a probability of selecting at least a part of the power conversion units as the target power conversion unit is different. In this way, a probability of randomly selecting the power conversion unit as the target power conversion unit may be different. For example, probabilities of selecting all the power conversion units as the target power conversion units may be different, or a probability of selecting a part of the power conversion units as the target power conversion unit may be different, and a probability of selecting a remaining power conversion unit as the target power conversion unit is the same.

In specific implementation, the control unit can further obtain the selection probability of each power conversion unit, and randomly select the target power conversion unit from the N power conversion units based on the selection probability of each power conversion unit. For example, the selection probability of each power conversion unit may be stored in a storage unit of the power supply system, and the control unit can obtain the selection probability of each power conversion unit from the storage unit, so that the control unit can obtain the selection probability of each power conversion unit, to randomly select a corresponding power conversion unit as the target power conversion unit based on the obtained selection probability of each power conversion unit.

The selection probability corresponding to each power conversion unit may be set as a fixed value in an offline manner or an online manner. For example, if an operator needs to set the selection probability in the online manner, the operator may input, through a user interface (UI), a probability adjustment instruction for a selection probability or selection probabilities corresponding to a part or all of the power conversion units. When receiving the probability adjustment instruction, the control unit can adjust the selection probability or selection probabilities of the part or all of the power conversion units based on the probability adjustment instruction.

In this application, the target power conversion unit may alternatively be selected in a fixed sequence. Specifically, in one or more control periodicities in a plurality of consecutive control periodicities, the target power conversion unit is one or more power conversion units selected from the N power conversion units in the fixed sequence. In this way, the target power conversion unit can be selected in a specific selection sequence.

During specific implementation, the N power conversion units include a first unit group to an M^{th} unit group that are disposed in sequence, and any unit group includes one or more power conversion units, and M is an integer and M≥2. In addition, the plurality of consecutive cycle periodicities include one or a combination of a first cycle periodicity and a second cycle periodicity. In the first cycle periodicity, one unit group sequentially selected based on a sequence from the first unit group to the M^{th} unit group is used as the target power conversion unit. In addition, in the second cycle periodicity, one unit group sequentially selected based on a sequence from the M^{th} unit group to the first unit group is used as the target power conversion unit.

In some examples, in each control periodicity, one unit group is cyclically selected as the target power conversion unit according to a unidirectional fixed time sequence (for example, a positive sequence). Based on this, every M control periodicities form one cycle periodicity. Therefore, a plurality of consecutive cycle periodicities can occur, and the plurality of cycle periodicities have a first cycle periodicity. For example, a part of the cycle periodicities may be set as the first cycle periodicity, or all the cycle periodicities may be set as the first cycle periodicity.

In still some examples, in each control periodicity, one unit group is cyclically selected as the target power conversion unit according to a unidirectional fixed time sequence (for example, a reverse sequence). Based on this, every M control periodicities may form one cycle periodicity. Therefore, a plurality of consecutive cycle periodicities can occur, and the plurality of cycle periodicities have a second cycle periodicity. For example, a part of the cycle periodicities may be set as the second cycle periodicity, or all the cycle periodicities may be set as the second cycle periodicity.

In still some examples, the first cycle periodicity and the second cycle periodicity are combined with each other. Based on this, when the plurality of cycle periodicities include the first cycle periodicity and the second cycle periodicity, the first cycle periodicity and the second cycle periodicity occur alternately. Alternatively, at least two adjacent first cycle periodicities and at least two adjacent second cycle periodicities may occur alternately.

In this application, the updated reference power Pᵣₑₛ' may be obtained in a plurality of update manners. The following describes the update manners of obtaining the updated reference power Pᵣₑₛ' by using an example.

Update manner 1: The updated reference power is equal to a target maximum power minus a reserved power.

Update manner 2: The updated reference power is equal to a target maximum power minus a reserved power.

Update manner 3: The updated reference power is equal to a target maximum power multiplied by a reference percentage.

Update manner 4: The updated reference power is equal to a target maximum power multiplied by a reference percentage.

The target maximum power is a maximum power in or a maximum power average value of maximum powers of the one or more target power conversion units.

It may be understood that an updated reference power in a k^{th} control periodicity may be the same as a reference power in a (k-1)^{th} control periodicity. Alternatively, an updated reference power in a k^{th} control periodicity may be greater than a reference power in a (k-1)^{th} control periodicity. Alternatively, an updated reference power in a k^{th} control periodicity may be less than a reference power in a (k-1)^{th} control periodicity. Herein, k is an integer greater than 0.

In some examples, a constant power threshold is set as the reserved power based on experimental data or experience, so that the reserved power is a constant value.

In some examples, the reserved power is updated by using the target maximum power. For example, if the reserved power is equal to the target maximum power multiplied by the percentage, the updated reference power is a value obtained by subtracting the reserved power obtained through update calculation from the target maximum power. It may be understood that the updated reserved power in the k^{th} control periodicity may be the same as the reserved power in the (k-1)^{th} control periodicity. Alternatively, the updated reserved power in the k^{th} control periodicity may be greater than the reserved power in the (k-1)^{th} control periodicity. Alternatively, the updated reserved power in the k^{th} control periodicity may be less than the reserved power in the (k-1)^{th} control periodicity.

In this application, that an operating mode of a power conversion unit other than the target power conversion unit in the N power conversion units remains unchanged means that the power conversion unit does not perform mode switching, and operates in one operating mode constantly. The following describes an implementation of the operating mode of the power conversion unit by using an example.

Implementation 1: An operating mode of a power conversion unit other than the target power conversion unit in the N power conversion units is the PR mode, and an operating power of the power conversion unit other than the target power conversion unit is an updated reference power. In this case, all the power conversion units can operate in the PR mode, to implement photovoltaic grid-forming. In addition, a part of the power conversion units is used as the target power conversion unit to perform mode switching between the PR mode and the MPPT mode, and an operating module of a remaining power conversion unit is constantly the PR mode, so that fluctuation of the output powers and the output voltages of the power conversion units can be reduced, and stability and control precision of the power supply system can be improved. In addition, for a reference power, in the PR mode, of the power conversion unit other than the target power conversion unit to be updated accordingly, after a reference power of the target power conversion unit is updated, the operating power of the power conversion unit other than the target power conversion unit is also switched to the updated reference power.

Implementation 2: If an operating mode of a power conversion unit other than the target power conversion unit in the N power conversion units is set to the MPPT mode, an operating power of the power conversion unit other than the target power conversion unit is a maximum power obtained in the MPPT mode. In this case, a part of the power conversion units is used as the target power conversion unit, operates in the PR mode, and performs mode switching between the PR mode and the MPPT mode, and an operating mode of a remaining power conversion unit is constantly the MPPT mode. This implements photovoltaic grid-forming. In addition, the target power conversion unit is enabled to perform mode switching between the PR mode and the MPPT mode, and the remaining power conversion unit is constantly in the MPPT mode, so that fluctuation of output powers and output voltages of the power conversion units can be reduced. This improves stability and control precision of the power supply system.

Implementation 3: For power conversion units other than the target power conversion unit in the N power conversion units, an operating mode of a part of the power conversion units is the PR mode, an operating power of the part of the power conversion units is updated with the updated reference power, an operating mode of a remaining power conversion unit is the MPPT mode, and an operating power of the remaining power conversion unit is a maximum power obtained in the MPPT mode. In this case, a part of the power conversion units is used as the target power conversion unit, and performs mode switching between the PR mode and the MPPT mode, and operating modes of remaining power conversion units remain unchanged. This implements photovoltaic grid-forming. In addition, because the operating mode of the part of the power conversion units other than the target power conversion unit is constantly the PR mode, for a reference power of the power conversion unit in the PR mode to also be updatable, after a reference power of the target power conversion unit is updated, the operating power of the power conversion unit may also be switched to the updated reference power. In addition, the operating mode of the remaining power conversion unit of the power conversion units other than the target power conversion unit is constantly the MPPT mode. Based on this, fluctuation of output powers and output voltages of the power conversion units can be reduced. This improves stability and control precision of the power supply system.

Implementation 4: An operating power of a power conversion unit other than the target power conversion unit in the N power conversion units is less than the maximum power, and the operating power of the power conversion unit other than the target power conversion unit is different from the updated reference power. The operating power of the power conversion unit other than the target power conversion unit may be greater than or less than the updated reference power. During specific implementation, the operating power of the power conversion unit other than the target power conversion unit may be determined based on the updated reference power, so that mode switching does not need to be performed on the operating power of the power conversion unit other than the target power conversion unit. In this way, fluctuation of output powers and output voltages of the power conversion units can be reduced. This improves stability and control precision of the power supply system.

It may be understood that, after a reference power of the target power conversion unit is updated, the operating power of the power conversion unit other than the target power conversion unit can be controlled to also be switched to the updated reference power. Certainly, the reference power of the power conversion unit other than the target power conversion unit in the PR mode does not need to be updated accordingly, but the power conversion unit other than the target power conversion unit in the PR mode is controlled to continue to operate at a reference power of the power conversion unit in a previous control periodicity.

In some examples, the power conversion unit includes a direct current-direct current (DC-DC) conversion circuit, and the power conversion system further includes a direct current-alternating current (DC-AC) conversion circuit. A first terminal of the direct current-direct current conversion circuit is configured to connect to a direct current power supply, a second terminal of the direct current-direct current conversion circuit is connected to a first terminal of the direct current-alternating current conversion circuit, and a second terminal of the direct current-alternating current conversion circuit is configured to connect to a load or a power grid. For example, the DC-DC conversion circuit is configured to: perform power conversion on a direct current input by the direct current power supply, and output a current obtained through the conversion to the DC-AC conversion circuit. The DC-AC conversion circuit is configured to: convert the input direct current into an alternating current, and output the alternating current to the load or the power grid.

In still some examples, the power conversion unit includes a DC-AC conversion circuit. A first terminal of the direct current-alternating current conversion circuit is configured to connect to a direct current power supply, and a second terminal of the direct current-alternating current conversion circuit is configured to connect to a load, a power grid, or an alternating current system. For example, the DC-AC conversion circuit is configured to: convert a direct current input by the direct current power supply into an alternating current, and then output the alternating current to the load, the power grid, or the alternating current system.

In still some examples, the power conversion unit includes a DC-DC conversion circuit. A first terminal of the direct current-direct current conversion circuit is configured to connect to a direct current power supply, and a second terminal of the direct current-direct current conversion circuit is configured to connect to a load, an energy storage unit, or a power generation unit. For example, the DC-DC conversion circuit is configured to: perform power conversion on a direct current input by the direct current power supply, and then output a current obtained through the conversion to the load, the energy storage unit, or the power generation unit. Alternatively, the DC-DC conversion circuit can be configured to: perform power conversion on a direct current input by the energy storage unit or the power generation unit, and then output a current obtained through the conversion to the direct current power supply.

In still some examples, the power conversion unit includes an alternating current-direct current (AC-DC) conversion circuit. A first terminal of the alternating current-direct current conversion circuit is configured to connect to an alternating current power supply, and a second terminal of the alternating current-direct current conversion circuit is configured to connect to a load, an energy storage unit, or a power generation unit. For example, the AC-DC conversion circuit is configured to: convert an alternating current input by an alternating current power supply into a direct current, and then output the direct current to the load, the energy storage unit, or the power generation unit. Alternatively, the AC-DC conversion circuit can be configured to: convert a direct current input by the energy storage unit or the power generation unit into an alternating current, and then output the alternating current to an alternating current power supply.

In still some examples, the power conversion system includes an AC-DC conversion circuit, and the power conversion system further includes a DC-AC conversion circuit. A first terminal of the alternating current-direct current conversion circuit is configured to connect to an alternating current power supply, a second terminal of the alternating current-direct current conversion circuit is connected to a first terminal of the direct current-alternating current conversion circuit, and a second terminal of the direct current-alternating current conversion circuit is configured to connect to a load or a power grid. For example, the AC-DC conversion circuit is configured to: convert an alternating current input by an alternating current power supply into a direct current, and then output the direct current to the DC-AC conversion circuit. The DC-AC conversion circuit is configured to: convert an input direct current into an alternating current, and then output the alternating current to the load, an energy storage unit, or a power generation unit. Alternatively, the DC-AC conversion circuit can convert an alternating current input by an energy storage unit or a power generation unit into a direct current, and then output the direct current to the AC-DC conversion circuit. The AC-DC conversion circuit can convert an input direct current into an alternating current, and then output the alternating current to an alternating current power supply.

During specific implementation, the control unit may be a field programmable gate array (FPGA), a general-purpose central processing unit (CPU), a general-purpose processor, a digital signal processor (DSP), or an application-specific integrated circuit (ASIC), or another programmable logic device, a transistor logic device, a hardware component, or any combination thereof. The control unit may implement or execute various example logical blocks, modules, and circuits described with reference to content disclosed in this application. The control unit may alternatively be a combination implementing a computing function, for example, a combination of one or more microprocessors, or a combination of the DSP and a microprocessor.

According to a second aspect, an embodiment of this application further provides a power update control method. The power update control method is applied to a power conversion system. The power conversion system includes N power conversion units, N is an integer, and N≥2. A first terminal of each power conversion unit is configured to connect to a direct current power supply or an alternating current power supply, and a second terminal of each power conversion unit is configured to connect to a load, an energy storage unit, or a power grid. The power conversion unit is configured to: perform conversion on a direct current input by the direct current power supply or an alternating current input by the alternating current power supply, and then output a current obtained through the conversion. In addition, the power update control method includes: controlling operating modes of one or more target power conversion units in the N power conversion units to be switched between a PR mode and a MPPT mode, and updating a reference power based on a maximum power obtained in the MPPT mode, for an operating power of the target power conversion unit obtained after switching from the MPPT mode to the PR mode to be an updated reference power, where the updated reference power is less than or equal to the maximum power; and controlling an operating mode of a power conversion unit other than the target power conversion unit in the N power conversion units to remain unchanged.

In addition, for a manner of selecting the target power conversion unit, refer to the manner according to any one of the first aspect or the embodiments of the first aspect. Details are not described herein again.

According to a third aspect, an embodiment of this application further provides a power supply system. The power supply system includes a power conversion system. A first terminal of a power conversion unit in the power conversion system is connected to a direct current power supply or an alternating current power supply, and a second terminal of the power conversion unit is configured to connect to a load, an energy storage unit, a power generation unit, or a power grid. In addition, the power conversion system is configured to: perform conversion on a direct current input by the direct current power supply or an alternating current input by the alternating current power supply, and then output a current obtained through the conversion. The power conversion system is the power conversion system according to any one of the first aspect or the embodiments of the first aspect.

If the foregoing power supply system can be a photovoltaic system, the power supply system further includes a photovoltaic module. In addition, a first terminal of the power conversion unit in the power conversion system is connected to the photovoltaic module, and the photovoltaic module is used as the direct current power supply.

In addition, for technical effect of the corresponding solutions in the second aspect and the third aspect, refer to technical effect that can be obtained by using the corresponding solutions in the first aspect. Repeated content is not described in detail.

### BRIEF DESCRIPTION OF DRAWINGS

FIG. 1 is a diagram of an application scenario of a power supply system according to an embodiment of this application;
FIG. 2a is a diagram of a structure of a power conversion system according to an embodiment of this application;
FIG. 2b is a diagram of a specific structure of a power conversion system according to an embodiment of this application;
FIG. 3 is a diagram of an operating mode of a power conversion unit in a control periodicity according to an embodiment of this application;
FIG. 4 is a diagram of selecting a target power conversion unit according to an embodiment of this application;
FIG. 5 is another diagram of an operating mode of a power conversion unit in a control periodicity according to an embodiment of this application;
FIG. 6 is another diagram of selecting a target power conversion unit according to an embodiment of this application;
FIG. 7 is another diagram of an operating mode of a power conversion unit in a control periodicity according to an embodiment of this application;
FIG. 8 is another diagram of selecting a target power conversion unit according to an embodiment of this application;
FIG. 9 is another diagram of an operating mode of a power conversion unit in a control periodicity according to an embodiment of this application;
FIG. 10 is another diagram of selecting a target power conversion unit according to an embodiment of this application;
FIG. 11 is another diagram of an operating mode of a power conversion unit in a control periodicity according to an embodiment of this application;
FIG. 12 is another diagram of selecting a target power conversion unit according to an embodiment of this application;
FIG. 13 is a diagram of a cycle periodicity according to an embodiment of this application;
FIG. 14 is another diagram of a cycle periodicity according to an embodiment of this application;
FIG. 15a is a diagram of another structure of a power conversion system according to an embodiment of this application; and
FIG. 15b is a diagram of another structure of a power conversion system according to an embodiment of this application.

### Reference numerals:

100: photovoltaic module; 200: power conversion system; 300: grid-connected transformer; 400: power grid; 210_1 to 210_N: power conversion units; 211: DC-DC conversion circuit; 220: direct current-alternating current conversion unit; 212/221: DC-AC conversion circuit; 230: control unit; Bus+: positive direct current bus; and Bus-: negative direct current bus.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in the descriptions of this application, the term "a plurality of" is understood as "at least two". In addition, it should be understood that in description of this application, terms such as "first", "second", and the like are merely used for distinguishing and description, but should not be understood as indicating or implying relative importance, or should not be understood as indicating or implying a sequence.

It should be noted that identical reference numerals in the accompanying drawings of this application denote identical or similar structures. Therefore, repeated descriptions thereof are omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To facilitate understanding of the technical solutions provided in embodiments of this application, the following first describes an application scenario of the solutions of this application. A power conversion system provided in embodiments of this application can be used in a power supply system. The power supply system may be a photovoltaic system based on solar power generation or a wind power generation system based on wind power generation, or may be another energy conversion product or a power generation product. The power conversion system is applicable to outputting electric energy to a power grid via a grid-connected transformer, and is also applicable to supplying power to a base station device (for example, a base station device in a remote area with no mains supply or poor mains supply), supplying power to a battery, supplying power to a power generation unit (for example, a motor), or supplying power to various types of power-consuming devices such as household devices (such as a refrigerator and an air conditioner) in the power grid. Alternatively, the power conversion system is also applicable to transmitting electric energy generated by the power generation unit to a direct current power supply or an alternating current power supply, and reversely supplying electric energy to the direct current power supply or the alternating current power supply. Certainly, in actual application, a specific implementation of the power conversion system may be determined based on an actual application scenario. This is not limited herein.

The following provides detailed descriptions by using an example in which the power conversion system provided in embodiments of this application is used in a photovoltaic system scenario. For an operating process in which the power conversion system provided in embodiments of this application is used in another scenario, refer to the operating process in which the power conversion system is used in the power supply system. Repeated parts are not described.

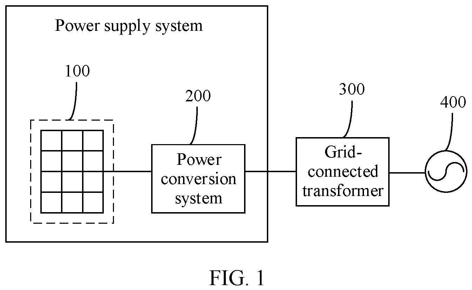

FIG. 1 is a diagram of an application scenario of a power supply system according to an embodiment of this application. Refer to FIG. 1. The power supply system includes a photovoltaic module 100 and a power conversion system 200. An input terminal of the power conversion system 200 is connected to the photovoltaic module 100, an output terminal of the power conversion system 200 is connected to an input terminal of a grid-connected transformer 300, and an output terminal of the grid-connected transformer 300 is connected to a power grid 400 (for example, an alternating current power grid). In specific application, the power conversion system 200 converts a direct current input by the photovoltaic module 100 into an alternating current, and then outputs the alternating current to the grid-connected transformer 300. The grid-connected transformer 300 performs boost conversion or buck conversion, and then outputs a current obtained through the boost conversion or buck conversion to the power grid 400. Certainly, in actual application, the grid-connected transformer 300 may not need to be disposed, and the output terminal of the power conversion system 200 is directly connected to the power grid 400. In addition, the output terminal of the power conversion system may alternatively be connected to a load to supply power to the load. Alternatively, the output terminal of the power conversion system may be connected to an alternating current system.

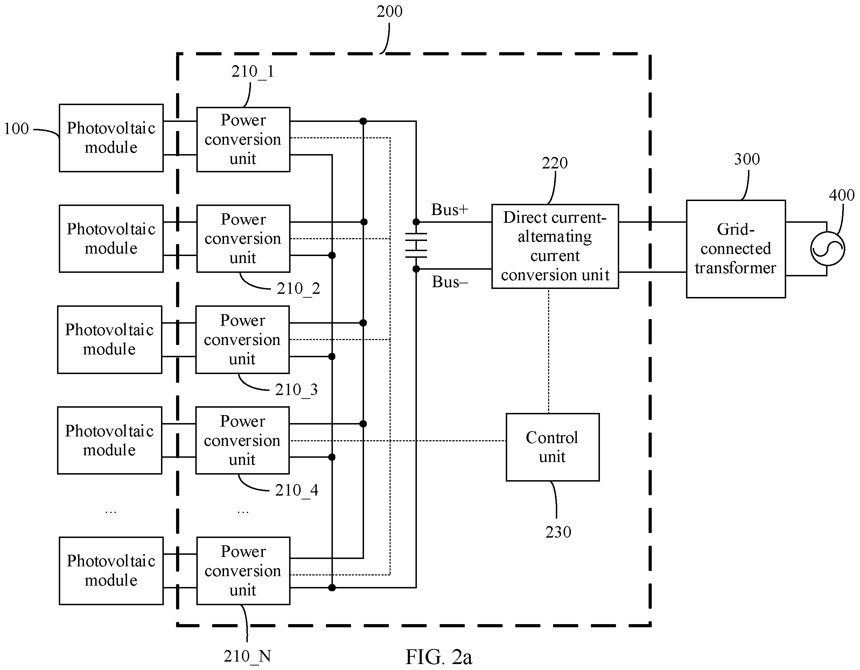

FIG. 2a is a diagram of a structure of the power conversion system according to an embodiment of this application. Refer to FIG. 2a. The power conversion system 200 includes N power conversion units 210_1 to 210_N (N is an integer and N≥2), a direct current-alternating current conversion unit 220, and a control unit 230, so that the power conversion system is set to a photovoltaic inverter of a dual-stage architecture. An input terminal of each of the power conversion units 210_1 to 210_N is connected to the photovoltaic module 100 used as a direct current power supply, and an output terminal of each of the power conversion units 210_1 to 210_N is connected to an input terminal of the direct current-alternating current conversion unit 220 through a direct current bus (including a positive direct current bus Bus+ and a negative direct current bus Bus-). An output terminal of the direct current-alternating current conversion unit 220 is connected to the power grid 400 via the grid-connected transformer 300. In specific application, each of the power conversion units 210_1 to 210_N performs power conversion on a direct current input by the photovoltaic module 100, and then outputs a current obtained through the conversion to the direct current bus (including the positive direct current bus Bus+ and the negative direct current bus Bus-). The direct current-alternating current conversion unit 220 converts the direct current on the direct current bus (including the positive direct current bus Bus+ and the negative direct current bus Bus-) into an alternating current, and then outputs the alternating current to the grid-connected transformer 300. The grid-connected transformer 300 performs boost or buck conversion, and then outputs a current obtained through the conversion to the power grid 400. Alternatively, the output terminal of the direct current-alternating current conversion unit is connected to a load to supply power to the load. It may be understood that N may be set to 2, 3, 4, 5, or more, and a specific value of N may be determined based on a requirement of an actual application scenario. This is not limited herein. Alternatively, one, two, three, or more control units may be disposed, and a specific quantity of control units may also be determined based on the requirement of the actual application scenario. This is not limited herein.

The power conversion unit in embodiments of this application may operate in an MPPT mode, to track a maximum power Pₘₚₚ output by the photovoltaic module. In this case, an operating power of the power conversion unit is the maximum power Pₘₚₚ. To enable the power supply system in this application to have an output capability of increasing a power and decreasing a power, and implement photovoltaic grid-forming, the power conversion unit needs to operate in a PR mode. When the power conversion unit operates in a PR mode, the operating power of the power conversion unit is a reference power Pᵣₑₛ, and the reference power Pᵣₑₛ is less than or equal to the maximum power Pₘₚₚ. In addition, an output power of the photovoltaic module is approximately equal to the reference power Pᵣₑₛ (a device loss is ignored). However, as an environment in which the photovoltaic module is located changes, a power output characteristic of the photovoltaic module changes, and the maximum power Pₘₚₚ also changes. Therefore, the reference power Pᵣₑₛ needs to be adjusted accordingly to adapt to the change of the maximum power. Therefore, the power conversion unit may be controlled to operate in the MPPT mode, to detect a current maximum power of the photovoltaic module, and then the reference power Pᵣₑₛ is updated based on the detected current maximum power, to obtain an updated reference power Pᵣₑₛ', so that an operating power of the power conversion unit operating in the PR mode is the updated reference power Pᵣₑₛ'. Based on this, to implement photovoltaic grid-forming, the power conversion unit needs to operate in the PR mode, and update the reference power by detecting the maximum power of the photovoltaic module in the MPPT mode. As a result, the power conversion unit needs to switch between the PR mode and the MPPT mode, resulting in fluctuation of a total output power and an output voltage of the power conversion unit, and the like. This endangers stability and control precision of the power supply system, and even increases mechanical stress and thermal stress of a device.

Therefore, in this application, in each control periodicity, the control unit 230 controls operating modes of one or more target power conversion units in the N power conversion units to be switched between the PR mode and the MPPT mode. After the operating mode of the target power conversion unit is switched to the MPPT mode, the maximum power Pₘₚₚ output by photovoltaic module can be obtained in the MPPT mode. Therefore, the original reference power Pᵣₑₛ in a (k-1)^{th} control periodicity can be updated based on the maximum power Pₘₚₚ obtained in the MPPT mode in a k^{th} control periodicity, to obtain the updated reference power Pᵣₑₛ' in the k^{th} control periodicity. Further, in the k^{th} control periodicity, an operating power of the target power conversion unit obtained after switching from the MPPT mode to the PR mode can be changed to the updated reference power Pᵣₑₛ'. In addition, in each control periodicity, the control unit 230 further controls an operating mode of a power conversion unit other than the target power conversion unit in the N power conversion units to remain unchanged, that is, the power conversion unit other than the target power conversion unit does not perform mode switching. In this way, in the N power conversion units, a part of the power conversion units may be enabled to perform mode switching between the PR mode and the MPPT mode, and a remaining power conversion unit does not perform mode switching. In comparison with a case in which all the N power conversion units perform mode switching between the PR mode and the MPPT mode, fluctuation of an output power and an output voltage of the power conversion unit can be reduced, and stability and control precision of the power supply system can be improved.

It may be understood that Pᵣₑₛ'<Pₘₚₚ, to implement photovoltaic grid-forming. Certainly, in actual application, alternatively, Pᵣₑₛ'=Pₘₚₚ. This is not limited herein.

In addition, according to the foregoing embodiment, mechanical stress, thermal stress, and the like of a device in the power conversion system can be further reduced, and overall stability of the power conversion system can be improved.

In this application, the updated reference power Pᵣₑₛ' may be obtained in a plurality of update manners. The following describes the update manners of obtaining the updated reference power Pᵣₑₛ' by using an example.

Update manner 1: In a control periodicity, if the control unit 230 selects one power conversion unit (for example, 210_1) from the N power conversion units as the target power conversion unit, after an operating mode of the power conversion unit 210_1 is switched to the MPPT mode, a maximum power P_{mpp_}1 output by the photovoltaic module 100 can be obtained in the MPPT mode, so that the maximum power P_{mpp_}1 can be used as a target maximum power Pₐ₁, that is, Pₐ₁=P_{mpp_}1. Based on this, the updated reference power Pᵣₑₛ' is equal to the target maximum power Pₐ₁ minus a reserved power ΔP, that is, Pᵣₑₛ'=Pₐ₁-ΔP. A constant power threshold may be set as the reserved power ΔP based on experimental data or experience. Alternatively, a power threshold that can be updated accordingly may be obtained based on the maximum power P_{mpp_}1 and used as the reserved power ΔP. For example, before the operating mode of the power conversion unit 210_1 is switched to the MPPT mode, the operating mode of the power conversion unit 210_1 is still the PR mode. In this case, the power conversion unit 210_1 corresponds to a reserved power ΔP'. After the control unit 230 controls the operating mode of the power conversion unit 210_1 to be switched to the MPPT mode, the maximum power P_{mpp_}1 obtained by the power conversion unit 210_1 in the MPPT mode can be controlled, so that the reserved power ΔP' can be updated based on the maximum power P_{mpp_}1, to obtain an updated reserved power ΔP". In this way, Pᵣₑₛ'=Pₐ₁-ΔP". For example, the maximum power P_{mpp_}1 is multiplied by a percentage Cc to be used as the reserved power ΔP", that is, ΔP"=P_{mpp_}1*C_{C}, where 0%≤C_{C}≤100%, and 70%≤C_{C}≤100%, for example, 80%≤C_{C}≤100%, for example, 85%≤C_{C}≤95%. In a specific application, Cc may be set to 70%, 75%, 80%, 85%, 90%, 95%, or the like. This is not limited herein.

Update manner 2: In a control periodicity, if the control unit 230 selects a plurality of power conversion units from the N power conversion units as the target power conversion units, for example, selects two power conversion units 210_1 and 210_2 as the target power conversion units, after an operating mode of the power conversion unit 210_1 is switched to the MPPT mode, a maximum power P_{mpp_}1 output by the photovoltaic module can be obtained in the MPPT mode, and after an operating mode of the power conversion unit 210_2 is switched to the MPPT mode, a maximum power P_{mpp_}2 output by the photovoltaic module can be obtained in the MPPT mode, so that an average value (for example, an arithmetic average value or a weighted average value) of the maximum powers P_{mpp_}1 and P_{mpp_}2 can be used as a target maximum power P_{b1}. That is, P_{b1} is equal to the average value (for example, the arithmetic average value or the weighted average value) of P_{mpp_}1 and P_{mpp_}2. Based on this, the updated reference power Pᵣₑₛ' is equal to the target maximum power P_{b1} minus a reserved power ΔP, that is, Pᵣₑₛ'=P_{b1}-ΔP. A constant power threshold may be set as the reserved power ΔP based on experimental data or experience. Alternatively, a power threshold that can be updated accordingly may be obtained based on the maximum power P_{mpp_}1 or P_{mpp_}2 as the reserved power ΔP. For example, the maximum power P_{mpp_}1 is used as an example. A reserved power ΔP' may be updated based on the maximum power P_{mpp_}1, to obtain an updated reserved power ΔP" (for example, the maximum power P_{mpp_}1 or P_{mpp_}2 is multiplied by a percentage to be used as the reserved power ΔP"), so that Pᵣₑₛ'=P_{b1}-ΔP". For example, the maximum power P_{mpp_}1 or P_{mpp_}2 is multiplied by a percentage C_{C} to be used as the reserved power ΔP", that is, ΔP"=P_{mpp_}1*C_{C} or ΔP"=P_{mpp_}2*C_{C}. Alternatively, a power threshold that can be updated accordingly may be obtained based on the target maximum power P_{b1} and used as the reserved power ΔP, and the reserved power ΔP' may be updated based on the target maximum power P_{b1}, to obtain an updated reserved power ΔP", where Pᵣₑₛ'=P_{b1}-ΔP". For example, the target maximum power P_{b1} is multiplied by the percentage and used as the reserved power ΔP", that is, ΔP"=P_{b1}*C_{C}.

Update manner 3: In a control periodicity, if the control unit 230 selects one power conversion unit (for example, 210_1) from the N power conversion units as the target power conversion unit, after an operating mode of the power conversion unit 210_1 is switched to the MPPT mode, a maximum power P_{mpp_}1 output by the photovoltaic module can be obtained in the MPPT mode, so that the maximum power P_{mpp_}1 is used as a target maximum power Pₐ₂, that is, Pₐ₂=P_{mpp_}1. Based on this, the updated reference power Pᵣₑₛ' may be equal to a target maximum power Pₐ₂ multiplied by a reference percentage C_{A}, that is, Pᵣₑₛ'=Pₐ₂*C_{A}, where 70%≤C_{A}<100%, for example, 80%≤C_{A}<100%, for example, 85%≤C_{A}≤95%. In a specific application, C_{A} may be set to 70%, 75%, 80%, 85%, 90%, 95%, or the like. This is not limited herein.

Update manner 4: In a control periodicity, if the control unit 230 selects a plurality of power conversion units from the N power conversion units as the target power conversion units, for example, selects two power conversion units 210_1 and 210_2 as the target power conversion units, after an operating mode of the power conversion unit 210_1 is switched to the MPPT mode, a maximum power P_{mpp_}1 output by the photovoltaic module can be obtained in the MPPT mode, and after an operating mode of the power conversion unit 210_2 is switched to the MPPT mode, a maximum power P_{mpp_}2 output by the photovoltaic module can be obtained in the MPPT mode, so that an average value (for example, an arithmetic average value or a weighted average value) of the maximum powers P_{mpp_}1 and P_{mpp_}2 can be used as a target maximum power P_{b2}. That is, P_{b2} is equal to the average value (for example, the arithmetic average value or the weighted average value) of P_{mpp_}1 and P_{mpp_}2. Based on this, the updated reference power Pᵣₑₛ' is equal to a target maximum power P_{b2} multiplied by a reference percentage C_{B}, that is, Pᵣₑₛ'=Pₐ₂*C_{B}, where 70%≤C_{B}<100%, for example, 80%≤C_{B}<100%, for example, 85%≤C_{B}≤95%. In a specific application, C_{B} may be set to 70%, 75%, 80%, 85%, 90%, 95%, or the like. This is not limited herein.

It may be understood that, in each of a plurality of consecutive control periodicities, any update manner in Update manner 1 to Update manner 4 may be used to obtain the updated reference power. Alternatively, in a plurality of consecutive control periodicities, two, three, or four update manners in Update manner 1 to Update manner 4 may be mutually combined to obtain the updated reference power.

It may be understood that an updated reference power in the k^{th} control periodicity may be the same as a reference power in the (k-1)^{th} control periodicity. Alternatively, an updated reference power in the k^{th} control periodicity may be greater than a reference power in the (k-1)^{th} control periodicity. Alternatively, an updated reference power in the k^{th} control periodicity may be less than a reference power in the (k-1)^{th} control periodicity. Herein, k is an integer greater than 0. That is, when the target power conversion unit operates in the MPPT mode, the corresponding maximum power Pₘₚₚ may be greater than the original reference power Pᵣₑₛ. Because the updated reference power Pᵣₑₛ' is less than or equal to the maximum power Pₘₚₚ, the following relationship exists between the updated reference power Pᵣₑₛ' and the original reference power Pᵣₑₛ: Pᵣₑₛ'>Pᵣₑₛ, or Pᵣₑₛ'<Pᵣₑₛ, or Pᵣₑₛ'=Pᵣₑₛ.

In addition, the updated reserved power in the k^{th} control periodicity may be the same as the reserved power in the (k-1)^{th} control periodicity. Alternatively, the updated reserved power in the k^{th} control periodicity may be greater than the reserved power in the (k-1)^{th} control periodicity. Alternatively, the updated reserved power in the k^{th} control periodicity may be less than the reserved power in the (k-1)^{th} control periodicity.

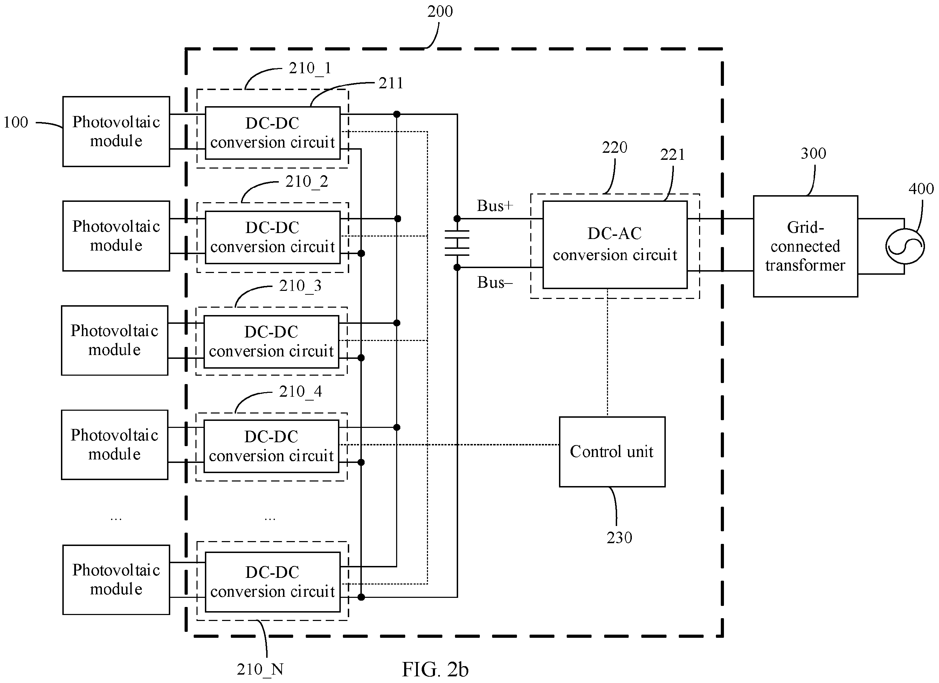

FIG. 2b is a diagram of a specific structure of the power conversion system according to an embodiment of this application. Refer to FIG. 2b. Each of the power conversion units 210_1 to 210_N may be a direct current-direct current (DC-DC) conversion circuit 211, the direct current-alternating current conversion unit 220 may be a (DC-AC) conversion circuit 221, and the control unit 230 may be a field programmable gate array (FPGA), a general-purpose central processing unit (CPU), a general-purpose processor, a digital signal processor (DSP), an application-specific integrated circuit (ASIC), or another programmable logic device, a transistor logic device, a hardware component, or any combination thereof. The control unit may implement or execute various example logical blocks, modules, and circuits described with reference to content disclosed in this application. The control unit may be a combination implementing a computing function, for example, a combination of one or more microprocessors, or a combination of the DSP and a microprocessor.

In addition, refer to FIG. 2b. A first terminal of the direct current-direct current conversion circuit 211 is connected to the photovoltaic module 100 used as the direct current power supply, a second terminal of the direct current-direct current conversion circuit 211 is connected to a first terminal of the direct current-alternating current conversion circuit 221 through a direct current bus, and a second terminal of the direct current-alternating current conversion circuit 221 is configured to connect to the power grid. For example, the DC-DC conversion circuit 211 performs power conversion on a direct current input by the photovoltaic module 100, and then outputs a current obtained through the conversion to the DC-AC conversion circuit 221. The DC-AC conversion circuit 221 converts the input direct current into an alternating current, and then outputs the alternating current to the power grid 400. In addition, the second terminal of the direct current-alternating current conversion circuit 221 may alternatively be connected to a load to supply power to the load.

In this application, that an operating mode of a power conversion unit other than the target power conversion unit remains unchanged means that the power conversion unit does not perform mode switching, and operates in one operating mode constantly. The following describes an implementation of the operating mode of the power conversion unit other than the target power conversion unit by using an example.

Implementation 1: An operating mode of a power conversion unit other than the target power conversion unit in the N power conversion units is set to the PR mode, and an operating power of the power conversion unit is updated with the updated reference power Pᵣₑₛ'. In this case, all the power conversion units 210_1 to 210_N can operate in the PR mode, to implement photovoltaic grid-forming. In addition, the power conversion units 210_1 to 210_k are used as the target power conversion units to perform mode switching between the PR mode and the MPPT mode, and the power conversion units 210_k+1 to 210_N do not perform mode switching, so that fluctuation of the output power and the output voltage of the power conversion unit can be reduced, and stability and control precision of the power supply system can be improved. In addition, for a reference power, in the PR mode, of the power conversion unit other than the target power conversion unit to be updated accordingly, after a reference power of the target power conversion unit is updated, the operating power of the power conversion unit is also switched to the updated reference power Pᵣₑₛ'. It may be understood that k is an integer, 1≤k<N, and k needs to be determined based on an actual application scenario.

It may be understood that, after the reference power of the target power conversion unit is updated, the operating power of the power conversion unit other than the target power conversion unit can be controlled to also be switched to the updated reference power. Certainly, the reference power of the power conversion unit other than the target power conversion unit in the PR mode does not need to be updated accordingly, but the power conversion unit in the PR mode is controlled to continue to operate at a reference power of the power conversion unit in a previous control periodicity.

Implementation 2: An operating mode of a power conversion unit other than the target power conversion unit in the N power conversion units is set to the MPPT mode, and an operating power of the power conversion unit is a maximum power obtained in the MPPT mode. In this case, the power conversion units 210_1 to 210_k are used as the target power conversion units, operate in the PR mode, and perform mode switching between the PR mode and the MPPT mode, and the power conversion units 210_k+1 to 210_N do not perform mode switching, to implement photovoltaic grid-forming. In addition, the target power conversion units 210_1 to 210_k are enabled to perform mode switching between the PR mode and the MPPT mode, and the power conversion units 210_k+1 to 210_N are constantly in the MPPT mode, so that fluctuation of an output power and an output voltage of the power conversion unit can be reduced. This improves stability and control precision of the power supply system.

Implementation 3: For power conversion units other than the target power conversion unit in the N power conversion units, an operating mode of a part of the power conversion units is set to the PR mode, an operating power of the part of the power conversion units is the updated reference power Pᵣₑₛ', an operating mode of a remaining power conversion unit is the MPPT mode, and an operating power of the remaining power conversion unit is a maximum power obtained in the MPPT mode. In this case, the power conversion units 210_1 to 210_k are used as the target power conversion units, and perform mode switching between the PR mode and the MPPT mode, and the power conversion units 210_k+1 to 210_N do not perform mode switching, to implement photovoltaic grid-forming. In addition, operating modes of the power conversion units 210_k+1 to 210_k+m are constantly the PR mode. For reference powers of the power conversion units 210_k+1 to 210_k+m in the PR mode to also be updatable, after a reference power of the target power conversion unit is updated, the operating powers of the power conversion units 210_k+1 to 210_k+m may also be switched to the updated reference power Pᵣₑₛ'. In addition, operating modes of the power conversion units 210_k+m+1 to 210_ N are constantly the MPPT mode. Based on this, fluctuation of output powers and output voltages of the power conversion units can be reduced. This improves stability and control precision of the power supply system. Herein, m is an integer greater than 1, and m needs to be determined based on an actual application scenario.

Implementation 4: An operating power of a power conversion unit other than the target power conversion unit in the N power conversion units is less than a maximum power, and the operating power of the power conversion units is different from the updated reference power. The operating power of the power conversion unit may be greater than or less than the updated reference power. During specific implementation, the operating power of the power conversion unit may be determined based on the updated reference power, so that mode switching does not need to be performed on the operating power of the power conversion units. In this way, fluctuation of output powers and output voltages of the power conversion units can be reduced. This improves stability and control precision of the power supply system.

It may be understood that, in each of a plurality of consecutive control periodicities, the power conversion unit other than the target power conversion unit may be controlled to operate by using one of Implementations 1 to 4. Alternatively, in a plurality of consecutive control periodicities, the power conversion unit other than the target power conversion unit may be controlled to operate by using two, three, or four of Implementations 1 to 4.

In this application, the target power conversion unit may be randomly selected. Specifically, in one or more control periodicities in a plurality of consecutive control periodicities, one or more power conversion units are randomly selected from the N power conversion units as the target power conversion units. In this way, the target power conversion unit can be selected in a random selection manner.

In this application, a probability of selecting at least a part of the power conversion units as the target power conversion unit may be different. For example, probabilities of selecting all the power conversion units as the target power conversion units may be different, or a probability of selecting a part of the power conversion units as the target power conversion unit may be different, and a probability of selecting a remaining power conversion unit as the target power conversion unit may be the same.

With reference to specific embodiments, the following describes in detail an operating process of randomly selecting the target power conversion unit in embodiments of this application.

### Embodiment 1

When the target power conversion unit is randomly selected, each power conversion unit is selected as the target power conversion unit at a same probability χ0. In this way, the power conversion unit may be randomly selected as the target power conversion unit at a same probability. Further, in each control periodicity, the power conversion unit is randomly selected as the target power conversion unit at the same probability.

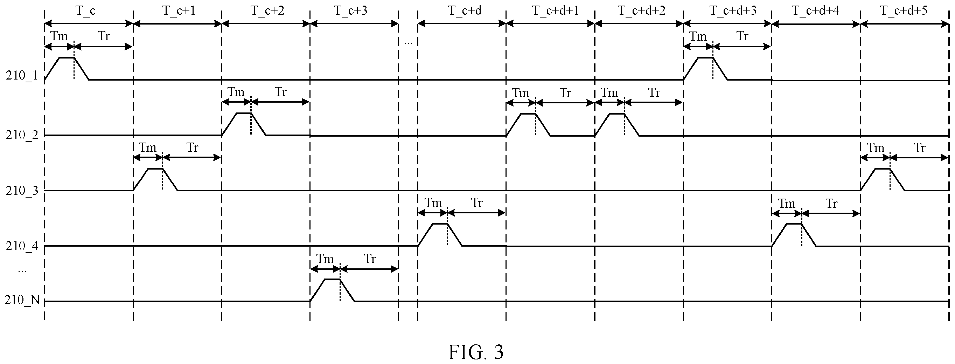

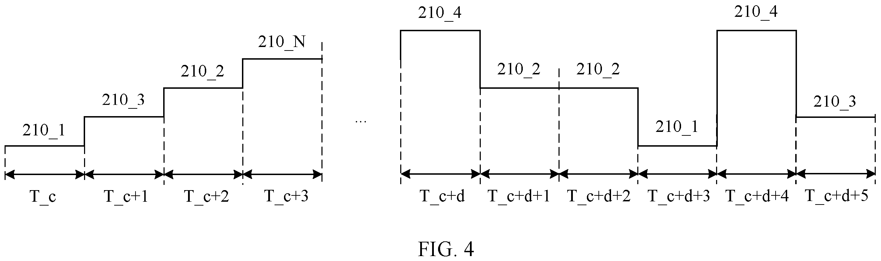

The following provides descriptions, with reference to FIG. 3 and FIG. 4, by using consecutive control periodicities T_c to T_c+d+5 as examples and by using an example in which one power conversion unit is selected in each control periodicity as the target power conversion unit. FIG. 3 is a diagram of an operating mode of a power conversion unit in a control periodicity according to an embodiment of this application. FIG. 4 is a diagram of selecting a target power conversion unit according to an embodiment of this application.

Refer to FIG. 3 and FIG. 4. In the c^{th} control periodicity T_c, the control unit 230 randomly selects the power conversion unit 210_1 from the power conversion units 210_1 to 210_N as the target power conversion unit based on the same probability χ0. In this case, the power conversion units 210_2 to 210_N are used as power conversion units other than the target power conversion unit. Based on this, in a phase Tm, the control unit 230 controls the operating mode of the power conversion unit 210_1 to be switched to the MPPT mode, and obtains, in the MPPT mode, the maximum power P_{mpp_}1 that can be output by the photovoltaic module 100, to obtain the updated reference power Pᵣₑₛ' according to Update manner 1 or Update manner 3. In a phase Tr, the control unit 230 controls the operating mode of the power conversion unit 210_1 to be switched from the MPPT mode to the PR mode, for an operating power of the power conversion unit 210_1 obtained after switching to the PR mode to be the updated reference power Pᵣₑₛ'. In addition, for example, the power conversion units 210_2 to 210_N operate in the PR mode in both the phase Tm and the phase Tr. When the power conversion unit 210_1 performs mode switching, the power conversion units 210_2 to 210_N remain to operate in the PR mode. After the updated reference power Pᵣₑₛ' is obtained, the control unit 230 controls the operating powers of the power conversion units 210_2 to 210_N to be switched to the updated reference power Pᵣₑₛ'. Similarly, in the (c+1)^{th} control periodicity T_c+1, the control unit 230 selects the power conversion unit 210_3 as the target power conversion unit. In the (c+2)^{th} control periodicity T_c+2, the control unit 230 selects the power conversion unit 210_2 as the target power conversion unit. In the (c+3)^{th} control periodicity T_c+3, the control unit 230 selects the power conversion unit 210_N as the target power conversion unit. In the (c+d)^{th} control periodicity T_c+d, the control unit 230 selects the power conversion unit 210_4 as the target power conversion unit. In the (c+d+1)^{th} control periodicity T_c+d+1, the control unit 230 selects the power conversion unit 210_2 as the target power conversion unit. In the (c+d+2)^{th} control periodicity T_c+d+2, the control unit 230 selects the power conversion unit 210_2 as the target power conversion unit. In the (c+d+3)^{th} control periodicity T_c+d+3, the control unit 230 selects the power conversion unit 210_1 as the target power conversion unit. In the (c+d+4)^{th} control periodicity T_c+d+4, the control unit 230 selects the power conversion unit 210_4 as the target power conversion unit. In the (c+d+5)^{th} control periodicity T_c+d+5, the control unit 230 selects the power conversion unit 210_3 as the target power conversion unit. In addition, for other operating processes in the (c+1)^{th} control periodicity to the (c+d+5)^{th} control periodicity T_c+1 to T_c+d+5, refer to the operating process in the c^{th} control periodicity T_c. Details are not described herein again.

It may be understood that χ0∈ [0,1], where a sum of the probabilities χ0 corresponding to the power conversion units 210_1 to 210_N may be 1, or a sum of the probabilities χ0 corresponding to the power conversion units 210_1 to 210_N may be greater than or less than 1. In a specific implementation, a selection probability χ0A of each of the power conversion units 210_1 to 210_N may be stored in a storage unit of the power supply system, and the control unit 230 can obtain the selection probability χ0A of each of the power conversion units 210_1 to 210_N from the storage unit, and randomly select a corresponding power conversion unit as the target power conversion unit based on the selection probability χ0A of each of the power conversion units 210_1 to 210_N. The selection probability χ0A corresponding to each of the power conversion units 210_1 to 210_N may be set to a fixed value in an offline manner or an online manner. For example, if an operator needs to set the selection probability χ0A in the online manner, the operator may input, through a user interface (User Interface, UI), a probability adjustment instruction for a selection probability or selection probabilities corresponding to a part or all of the power conversion units. When receiving the probability adjustment instruction, the control unit 230 can adjust the selection probability or selection probabilities of the part or all of the power conversion units based on the probability adjustment instruction. For example, if the target power conversion unit is randomly selected from the power conversion units 210_1 to 210_N at the same probability, the selection probability χ0A corresponding to each of the power conversion units 210_1 to 210_N may be set to a same value χ0A_1 based on the probability adjustment instruction. For example, if the target power conversion unit is randomly selected from the power conversion units 210_2 to 210_N at the same probability, the selection probability χ0A corresponding to each of the power conversion units 210_2 to 210_N may be set to a same value χ0A_2 based on the probability adjustment instruction. For example, if the target power conversion unit is randomly selected from the power conversion units 210_3 to 210_N at the same probability, the selection probability χ0A corresponding to each of the power conversion units 210_3 to 210_N may be set to a same value χ0A_3 based on the probability adjustment instruction.

It may be understood that each control periodicity includes the phase Tm in the MPPT mode and the phase Tr in the PR mode, that is, the phase Tm in the MPPT mode and the phase Tr in the PR mode form a control periodicity. In addition, periodicity duration of the control periodicities may be the same or may be different. In addition, the periodicity duration of the control periodicity may be a fixed constant, or may not be a fixed constant, that is, the periodicity duration is not fixed. In actual application, the periodicity duration may be adjusted and changed in real time based on duration of the phase Tm in the MPPT mode and duration of the phase Tr in the PR mode. The control periodicity in the following embodiments may be set in a similar way. Details are not described below one by one.

### Embodiment 2

When the target power conversion unit is randomly selected, a probability of selecting at least a part of the power conversion units as the target power conversion unit is different. In this way, a probability of randomly selecting the power conversion unit as the target power conversion unit may be different. For example, probabilities of selecting all the power conversion units as the target power conversion units may be different. For example, a probability of selecting the power conversion unit 210_1 as the target power conversion unit is χ_1, a probability of selecting the power conversion unit 210_2 as the target power conversion unit is χ_2, ..., and a probability of selecting the power conversion unit 210_N as the target power conversion unit is χ_N, and every two of χ_1 to χ_N are different. Alternatively, a probability of selecting a part of the power conversion units as the target power conversion unit may be different, and a probability of selecting a remaining power conversion unit as the target power conversion unit may be the same. For example, a probability of selecting the power conversion unit 210_1 as the target power conversion unit is χ_1, a probability of selecting the power conversion unit 210_2 as the target power conversion unit is χ_2, a probability of selecting the power conversion unit 210_3 as the target power conversion unit is χ_3, ..., and a probability of selecting the power conversion unit 210_N as the target power conversion unit is χ_N, χ_1=χ_2, and every two of χ_3 to χ_N are different. For example, in each control periodicity, the power conversion unit is randomly selected as the target power conversion unit at a different probability.

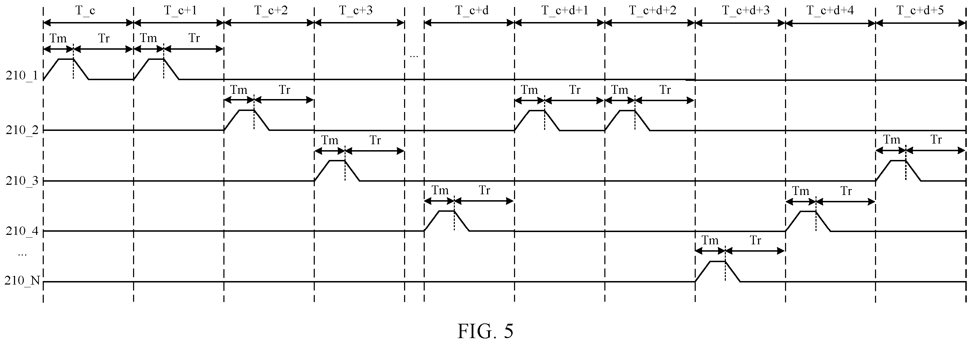

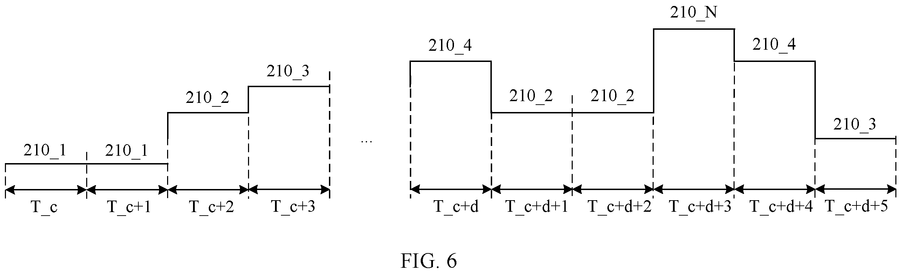

The following provides descriptions, with reference to FIG. 5 and FIG. 6, by using consecutive control periodicities T_c to T_c+d+5 as examples and by using an example in which one power conversion unit is selected in each control periodicity as the target power conversion unit. FIG. 5 is another diagram of an operating mode of a power conversion unit in a control periodicity according to an embodiment of this application. FIG. 6 is another diagram of selecting a target power conversion unit according to an embodiment of this application.

Refer to FIG. 5 and FIG. 6. In the c^{th} control periodicity T_c, the control unit 230 randomly selects the power conversion unit 210_1 from the power conversion units 210_1 to 210_N as the target power conversion unit based on a specified probability. In this case, the power conversion units 210_2 to 210_N are used as power conversion units other than the target power conversion unit. For operation of the power conversion unit 210_1 and the power conversion units 210_2 to 210_N, refer to the operating process in Embodiment 1. Details are not described herein again. Similarly, in the (c+1)^{th} control periodicity T_c+1, the control unit 230 selects the power conversion unit 210_1 as the target power conversion unit. In the (c+2)^{th} control periodicity T_c+2, the control unit 230 selects the power conversion unit 210_2 as the target power conversion unit. In the (c+3)^{th} control periodicity T_c+3, the control unit 230 selects the power conversion unit 210_3 as the target power conversion unit. In the (c+d)^{th} control periodicity T_c+d, the control unit 230 selects the power conversion unit 210_4 as the target power conversion unit. In the (c+d+1)^{th} control periodicity T_c+d+1, the control unit 230 selects the power conversion unit 210_2 as the target power conversion unit. In the (c+d+2)^{th} control periodicity T_c+d+2, the control unit 230 selects the power conversion unit 210_2 as the target power conversion unit. In the (c+d+3)^{th} control periodicity T_c+d+3, the control unit 230 selects the power conversion unit 210_N as the target power conversion unit. In the (c+d+4)^{th} control periodicity T_c+d+4, the control unit 230 selects the power conversion unit 210_4 as the target power conversion unit. In the (c+d+5)^{th} control periodicity T_c+d+5, the control unit 230 selects the power conversion unit 210_3 as the target power conversion unit. In addition, for other operating processes in the (c+1)^{th} control periodicity to the (c+d+5)^{th} control periodicity T_c+1 to T_c+d+5, refer to the operating process in the c^{th} control periodicity T_c. Details are not described herein again.

It may be understood that any one of χ_1 to χ_N is in [0,1], where a sum of χ_1 to χ_N may be 1, or a sum of the probabilities χ_1 to χ_N may be greater than or less than 1. In addition, in specific application, the storage unit of the power supply system also stores selection probabilities χB_1 to χB_N of the power conversion units. The control unit 230 can obtain the selection probabilities χB_1 to χB_N of the power conversion units 210_1 to 210_N from the storage unit, to randomly select a corresponding power conversion unit from the power conversion units 210_1 to 210_N as the target power conversion unit based on the selection probabilities χB_1 to χB_N of the power conversion units. Any one of the selection probabilities χB_1 to χB_N corresponding to the power conversion units 210_1 to 210_N may also be set to any fixed value in the offline manner or the online manner. For example, if the operator needs to set one or more of the selection probabilities χB_1 to χB_N in the online manner, the operator may input a probability adjustment instruction through a user interface (User Interface, UI). When receiving the probability adjustment instruction, the control unit 230 can adjust the selection probability or selection probabilities corresponding to the part or all of the power conversion units based on the probability adjustment instruction. For example, if the selection probability χB_1 needs to be adjusted, the operator inputs a probability adjustment instruction to the control unit 230 through the user interface, to change the selection probability of the power conversion unit 210_1 from χB_1 to χB_1'. Alternatively, for example, if the selection probabilities χB_1 to χB_3 need to be adjusted, the operator inputs a probability adjustment instruction to the control unit 230 through the user interface, to change χB_1 to χB_1', change χB_2 to χB_2', and change χB_3 to χB_3'.

In this application, the target power conversion unit may alternatively be selected in a fixed sequence. Specifically, in one or more control periodicities in a plurality of consecutive control periodicities, the target power conversion unit is one or more power conversion units selected from the N power conversion units in the fixed sequence. In this way, the target power conversion unit can be selected in a specific selection sequence. With reference to specific embodiments, the following describes in detail an operating process of selecting the target power conversion unit in the fixed sequence in embodiments of this application.

### Embodiment 1

In each control periodicity, one unit group is cyclically selected as the target power conversion unit according to a unidirectional fixed time sequence (for example, a positive sequence). Based on this, every M control periodicities form one cycle periodicity. Therefore, a plurality of consecutive cycle periodicities can occur, and the plurality of cycle periodicities have a first cycle periodicity. Specifically, the power conversion units 210_1 to 210_N are grouped into a first unit group Z_1 to an M^{th} unit group Z_M that are disposed in sequence. Any unit group in the unit groups Z_1 to Z_M includes one or more power conversion units, and M is an integer and M≥2. Power conversion units in different unit groups are different. For example, when each unit group in the unit groups Z_1 to Z_M may include one power conversion unit, M=N. For example, the unit group Z_1 includes the power conversion unit 210_1, the unit group Z_2 includes the power conversion unit 210_2, ..., and the unit group Z_N includes the power conversion unit 210_N. Alternatively, each unit group in the unit groups Z_1 to Z_M includes a plurality of power conversion units. For example, when each unit group in the unit groups Z_1 to Z_M includes two power conversion units, M=N/2. The unit group Z_1 includes the power conversion units 210_1 and 210_2, the unit group Z_2 includes the power conversion units 210_3 and 210_4, ..., and the unit group Z_M includes the power conversion units 210_N-1 and 210_N. Alternatively, a part of the unit groups each may include one power conversion unit, and the rest of the unit groups each may include a plurality of power conversion units. It may be understood that power conversion units in different units may alternatively be partially the same. This is not limited herein.

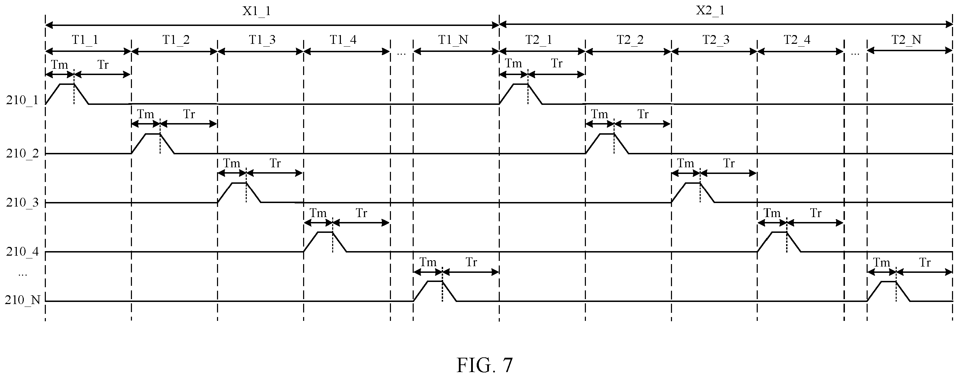

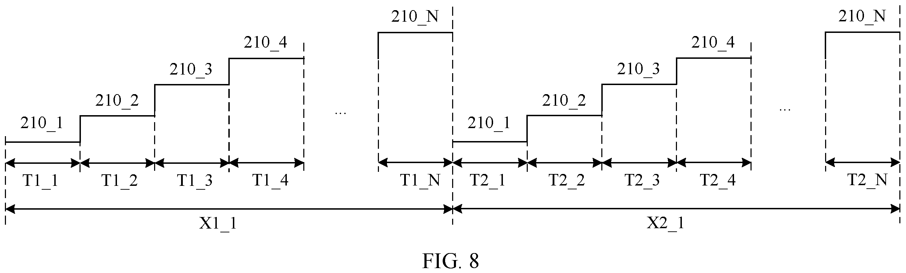

In addition, for the M control periodicities in the first cycle periodicity, a target power conversion unit in each control periodicity is a unit group selected in a sequence of the first unit group Z_1 to the M^{th} unit group Z_M. The following provides detailed descriptions, with reference to FIG. 7 and FIG. 8, by using an example in which any unit group in the unit groups Z_1 to Z_M includes one power conversion unit and by using first cycle periodicities X1_1 and X2_1 as examples. FIG. 7 is another diagram of an operating mode of a power conversion unit in a control periodicity according to an embodiment of this application. FIG. 8 is another diagram of selecting a target power conversion unit according to an embodiment of this application.

Refer to FIG. 7 and FIG. 8. The first cycle periodicity X1_1 has N control periodicities: a first control periodicity to an N^{th} control periodicity T1_1 to T1_N. Specifically, in the first control periodicity T1_1, the control unit 230 selects the power conversion unit 210_1 as the target power conversion unit, and the power conversion units 210_2 to 210_N are used as the power conversion units other than the target power conversion unit. In the second control periodicity T1_2, the control unit 230 selects the power conversion unit 210_2 as the target power conversion unit, and the power conversion units 210_1 and 210_3 to 210_N are used as the power conversion units other than the target power conversion unit. By analogy, in the N^{th} control periodicity T1_N, the control unit 230 selects the power conversion unit 210_N as the target power conversion unit, and the power conversion units 210_1 to 210_N-1 are used as the power conversion units other than the target power conversion unit. In addition, for other operating processes in the first control periodicity to the N^{th} control periodicity T1_1 to T1_N, refer to the operating process in Embodiment 1. Details are not described herein again.

After the first cycle periodicity X1_1 ends, the first cycle periodicity X2_1 is entered, and a selection process is performed again starting from the power conversion unit 210_1. Specifically, the first cycle periodicity X2_1 has N control periodicities: a first control periodicity to an N^{th} control periodicity T2_1 to T2_N. In the first control periodicity T2_1, the control unit 230 selects the power conversion unit 210_1 as the target power conversion unit, and the power conversion units 210_2 to 210_N are used as the power conversion units other than the target power conversion unit. In the second control periodicity T2_2, the control unit 230 selects the power conversion unit 210_2 as the target power conversion unit, and the power conversion units 210_1 and 210_3 to 210_N are used as the power conversion units other than the target power conversion unit. By analogy, in the N^{th} control periodicity T2_N, the control unit 230 selects the power conversion unit 210_N as the target power conversion unit, and the power conversion units 210_1 to 210_N-1 are used as the power conversion units other than the target power conversion unit. In addition, for other operating processes in the first control periodicity to the N^{th} control periodicity T2_1 to T2_N, refer to the operating process in Embodiment 1. Details are not described herein again.

Similarly, after the first cycle periodicity X2_1 ends, a selection process is performed again starting from the power conversion unit 210_1. Details are not described herein again.

It may be understood that a part of the cycle periodicities may be set as the first cycle periodicity, or all the cycle periodicities may be set as the first cycle periodicity.

### Embodiment 2

In each control periodicity, one unit group is cyclically selected as the target power conversion unit according to a unidirectional fixed time sequence (for example, a reverse sequence). Based on this, every M control periodicities may form one cycle periodicity. Therefore, a plurality of consecutive cycle periodicities can occur, and the plurality of cycle periodicities have a second cycle periodicity. Specifically, the power conversion units 210_1 to 210_N are grouped into a first unit group Z_1 to an M^{th} unit group Z_M that are disposed in sequence. For the M control periodicities in the second cycle periodicity, the target power conversion unit in each control periodicity is a unit group selected in a sequence of the M^{th} unit group Z_M to the first unit group Z_1. In addition, for implementations of the unit groups Z_1 to Z_M, refer to Embodiment 1. Details are not described herein again.

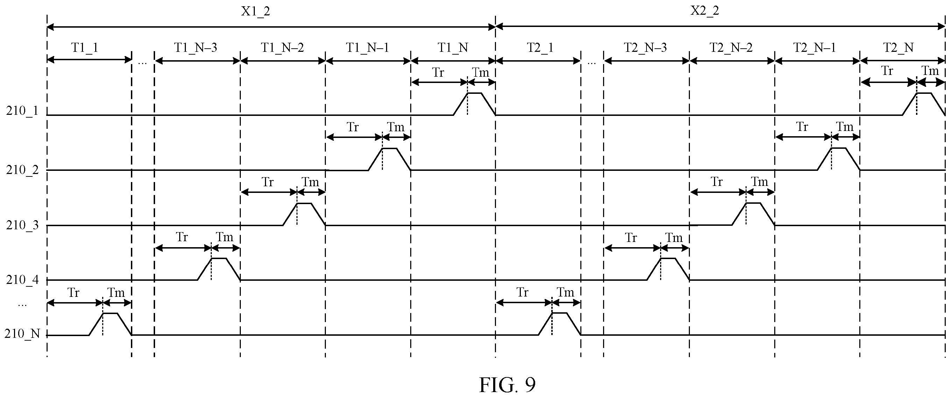

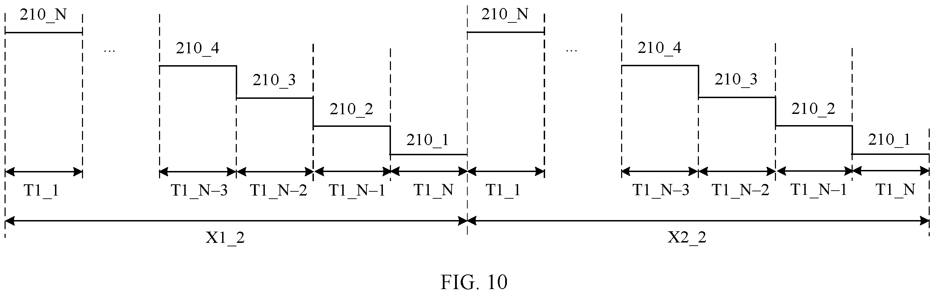

The following provides detailed descriptions, with reference to FIG. 9 and FIG. 10, by using an example in which any unit group in the unit groups Z_1 to Z_M includes one power conversion unit and by using second cycle periodicities X1_2 and X2_2 as examples. FIG. 9 is another diagram of an operating mode of a power conversion unit in a control periodicity according to an embodiment of this application. FIG. 10 is another diagram of selecting a target power conversion unit according to an embodiment of this application.

Refer to FIG. 9 and FIG. 10. The second cycle periodicity X1_2 has N control periodicities: a first control periodicity to an N^{th} control periodicity T1_1 to T1_N. Specifically, in the first control periodicity T1_1, the control unit 230 selects the power conversion unit 210_N as the target power conversion unit, ..., in the (N-1)^{th} control periodicity T1_N-1, the control unit 230 selects the power conversion unit 210_2 as the target power conversion unit, and in the N^{th} control periodicity T1_N, the control unit 230 selects the power conversion unit 210_1 as the target power conversion unit. In addition, for other operating processes in the first control periodicity to the N^{th} control periodicity T1_1 to T1_N, refer to the operating process in Embodiment 1. Details are not described herein again.

After the second cycle periodicity X1_2 ends, the second cycle periodicity X2_2 is entered, and a selection process is performed again starting from the power conversion unit 210_N. Specifically, the second cycle periodicity X2_2 has N control periodicities: a first control periodicity to an N^{th} control periodicity T2_1 to T2_N. In the first control periodicity T2_1, the control unit 230 selects the power conversion unit 210_N as the target power conversion unit, ..., in the (N-1)^{th} control periodicity T2_N-1, the control unit 230 selects the power conversion unit 210_2 as the target power conversion unit, and in the N^{th} control periodicity T2_N, the control unit 230 selects the power conversion unit 210_1 as the target power conversion unit. In addition, for other operating processes in the first control periodicity to the N^{th} control periodicity T2_1 to T2_N, refer to the operating process in Embodiment 1. Details are not described herein again.

Similarly, after the second cycle periodicity X2_2 ends, a selection process is performed again starting from the power conversion unit 210_N. Details are not described herein again.

It may be understood that a part of the cycle periodicities may be set as the second cycle periodicity, or all the cycle periodicities may be set as the second cycle periodicity.

### Embodiment 3

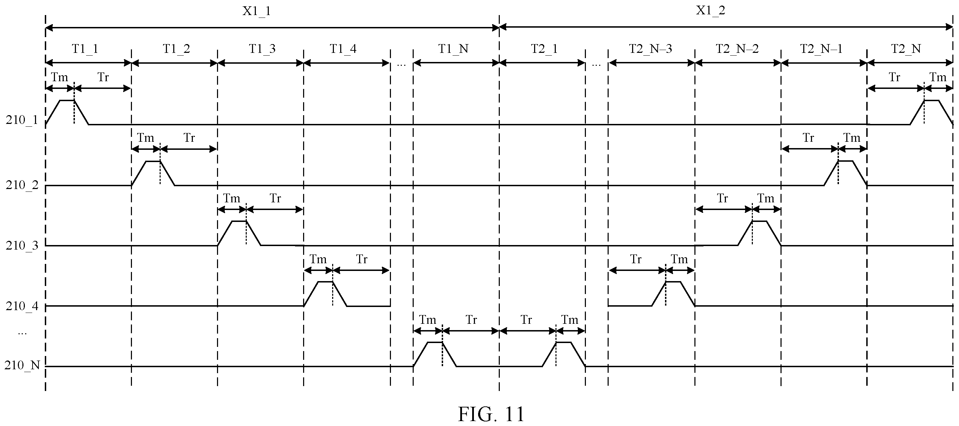

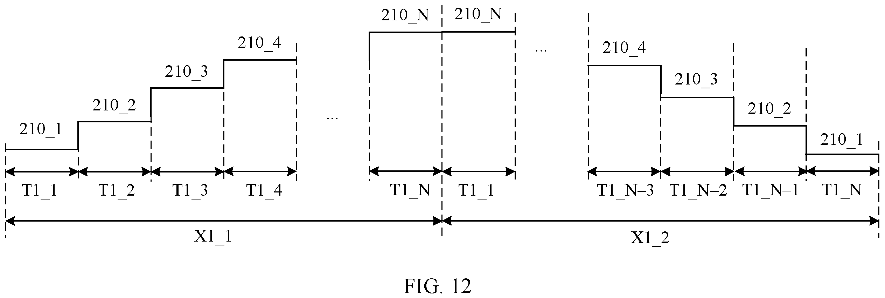

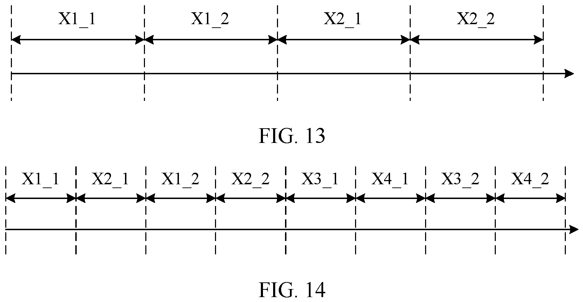

The first cycle periodicity and the second cycle periodicity are combined with each other, and the first cycle periodicity and the second cycle periodicity occur alternately. In this way, a bidirectional fixed time sequence cycle can be implemented. Specifically, for implementations of the unit groups Z_1 to Z_M, refer to Embodiment 1. Details are not described herein again. In addition, detailed descriptions are provided, with reference to FIG. 11 to FIG. 13, by using an example in which any unit group in the unit groups Z_1 to Z_M includes one power conversion unit and by using the first cycle periodicities X1_1 and X2_1 and the second cycle periodicities X1_2 to X2_2 as examples. FIG. 11 is another diagram of an operating mode of a power conversion unit in a control periodicity according to an embodiment of this application. FIG. 12 is another diagram of selecting a target power conversion unit according to an embodiment of this application. FIG. 13 is a diagram of a cycle periodicity according to an embodiment of this application. Refer to FIG. 11 to FIG. 13. First, an operating process in a first cycle periodicity X1_1 is performed. Then, an operating process in a second cycle periodicity X1_2 is performed. Then, an operating process in a first cycle periodicity X2_1 is performed. Then, an operating process in a second cycle periodicity X2_2 is performed. The rest may be deduced by analogy. Details are not described herein again. In addition, for the operating processes in the first cycle periodicities X1_1 and X2_1 and the second cycle periodicities X1_2 and X2_2, refer to the foregoing embodiments. Details are not described herein again.

### Embodiment 4

The first cycle periodicity and the second cycle periodicity are combined with each other, and at least two adjacent first cycle periodicities and at least two adjacent second cycle periodicities occur alternately. In this way, a bidirectional fixed time sequence cycle can also be implemented. Specifically, for implementations of the unit groups Z_1 to Z_M, refer to Embodiment 1. Details are not described herein again. During specific implementation, a quantity of adjacent first cycle periodicities may be the same as a quantity of adjacent second cycle periodicities. For example, two adjacent first cycle periodicities and two adjacent second cycle periodicities occur alternately. Alternatively, three adjacent first cycle periodicities and three adjacent second cycle periodicities occur alternately. Alternatively, four adjacent first cycle periodicities and four adjacent second cycle periodicities occur alternately. Alternatively, a quantity of adjacent first cycle periodicities may be different from a quantity of adjacent second cycle periodicities. For example, two adjacent first cycle periodicities and three adjacent second cycle periodicities occur alternately. Alternatively, two adjacent first cycle periodicities and four adjacent second cycle periodicities occur alternately. Alternatively, three adjacent first cycle periodicities and four adjacent second cycle periodicities occur alternately.

The following provides detailed descriptions, with reference to FIG. 14, by using an example in which two adjacent first cycle periodicities and two adjacent second cycle periodicities occur alternately. FIG. 14 is another diagram of a cycle periodicity according to an embodiment of this application. Refer to FIG. 14. First, an operating process in a first cycle periodicity X1_1 is performed. Then, an operating process in a first cycle periodicity X2_1 is performed. Then, an operating process in a second cycle periodicity X1_2 is performed. Then, an operating process in a second cycle periodicity X2_2 is performed. Then, an operating process in a first cycle periodicity X3_1 is performed. Then, an operating process in a first cycle periodicity X4_1 is performed. Then, an operating process in a second cycle periodicity X3_2 is performed. Then, an operating process in a second cycle periodicity X4_2 is performed. The rest may be deduced by analogy. Details are not described herein again. In addition, for the operating processes in the first cycle periodicities X1_1 and X4_1 and the second cycle periodicities X1_2 and X4_2, refer to the foregoing embodiments. Details are not described herein again.

It may be understood that embodiments of randomly selecting the target power conversion unit and the embodiments of selecting the target power conversion unit in the fixed sequence may be performed independently of each other. Alternatively, the embodiments of randomly selecting the target power conversion unit and the embodiments of selecting the target power conversion unit in the fixed sequence may be randomly combined. For example, after one or more first cycle periodicities and/or one or more second cycle periodicities are performed, the target power conversion unit may be randomly selected.

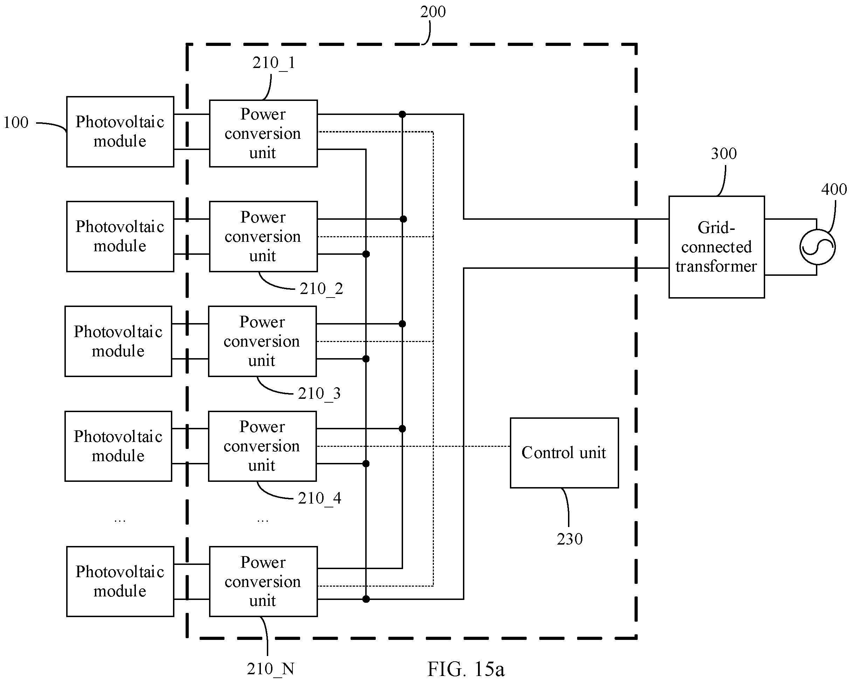

FIG. 15a is a diagram of another structure of the power conversion system according to an embodiment of this application. Refer to FIG. 15a. The power conversion system 200 includes N power conversion units 210_1 to 210_N (N is an integer and N≥2) and a control unit 230, so that the power conversion system is set to a photovoltaic inverter of a single-stage architecture. An input terminal of each of the power conversion units 210_1 to 210_N is separately connected to the photovoltaic module 100 used as a direct current power supply, and an output terminal of each of the power conversion units 210_1 to 210_N is connected to the power grid 400 via the grid-connected transformer 300. In specific application, each of the power conversion units 210_1 to 210_N converts a direct current input by the photovoltaic module 100 into an alternating current, and then outputs the alternating current to the grid-connected transformer 300. The grid-connected transformer 300 performs boost conversion or buck conversion, and then outputs a current obtained through the boost conversion or buck conversion to the power grid 400. Certainly, in actual application, the grid-connected transformer 300 may not need to be disposed, and the output terminal of the power conversion system 200 is directly connected to the power grid 400. In addition, the output terminal of the power conversion unit may alternatively be connected to a load to supply power to the load. Alternatively, the output terminal of the power conversion unit may be directly connected to the alternating current system.

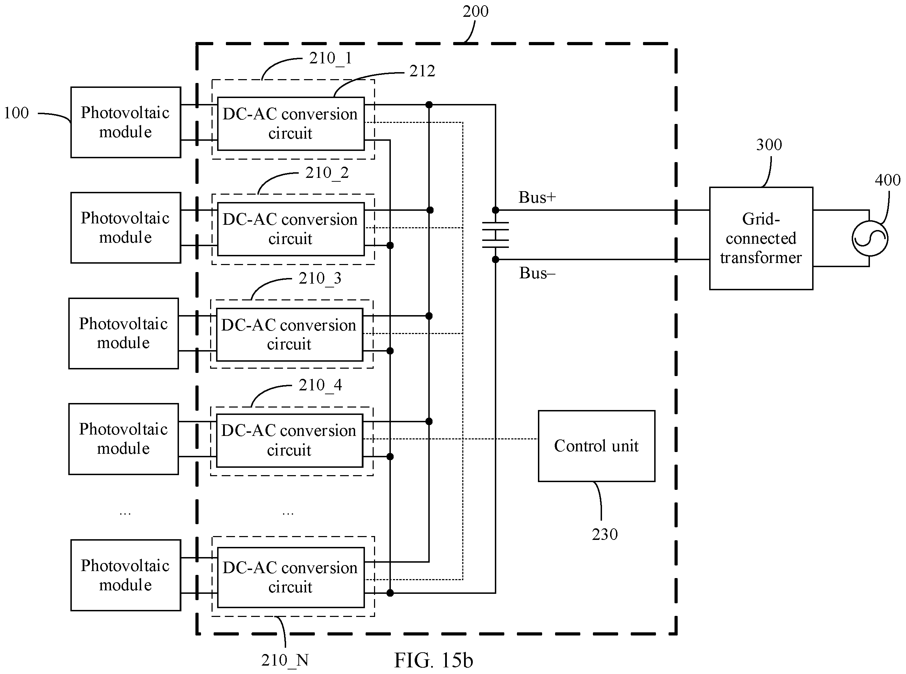

FIG. 15b is a diagram of another structure of a power conversion system according to an embodiment of this application. Refer to FIG. 15b. The power conversion unit may be a DC-AC conversion circuit 212. In addition, a first terminal of the DC-AC conversion circuit 212 is configured to connect to the photovoltaic module 100 used as the direct current power supply, and a second terminal of the DC-AC conversion circuit 212 is configured to connect to a load, the power grid, or the alternating current system. For example, the DC-AC conversion circuit 212 is configured to convert a direct current input by the photovoltaic module into an alternating current, and then output the alternating current to the load, the power grid, or the alternating current system. Other content in this embodiment may be basically the same as the content in the foregoing embodiments. Details are not described herein.

In still some examples, the power conversion unit may alternatively be a DC-DC conversion circuit. A first terminal of the direct current-direct current conversion circuit is configured to connect to a direct current power supply, and a second terminal of the direct current-direct current conversion circuit is configured to connect to a load, an energy storage unit, or a power generation unit. For example, the DC-DC conversion circuit is configured to: perform power conversion on a direct current input by the direct current power supply, and then output a current obtained through the conversion to the load, the energy storage unit, or the power generation unit. Alternatively, the DC-DC conversion circuit can be configured to: perform power conversion on a direct current input by the energy storage unit or the power generation unit, and then output a current obtained through the conversion to the direct current power supply. For example, the direct current power supply is a photovoltaic module.

In still some examples, the power conversion unit may alternatively be an AC-DC conversion circuit. A first terminal of the alternating current-direct current conversion circuit is configured to connect to an alternating current power supply, and a second terminal of the alternating current-direct current conversion circuit is configured to connect to a load, an energy storage unit, or a power generation unit. For example, the AC-DC conversion circuit is configured to: convert an alternating current input by an alternating current power supply into a direct current, and then output the direct current to the load, the energy storage unit, or the power generation unit. Alternatively, the AC-DC conversion circuit can be configured to: convert a direct current input by the energy storage unit or the power generation unit into an alternating current, and then output the alternating current to an alternating current power supply.

In still some examples, the power conversion system may alternatively be anAC-DC conversion circuit, and the power conversion system further includes a DC-AC conversion circuit. A first terminal of the alternating current-direct current conversion circuit is configured to connect to an alternating current power supply, a second terminal of the alternating current-direct current conversion circuit is connected to a first terminal of the direct current-alternating current conversion circuit, and a second terminal of the direct current-alternating current conversion circuit is configured to connect to a load or a power grid. For example, the AC-DC conversion circuit is configured to: convert an alternating current input by an alternating current power supply into a direct current, and then output the direct current to the DC-AC conversion circuit. The DC-AC conversion circuit is configured to: convert an input direct current into an alternating current, and then output the alternating current to the load, an energy storage unit, or a power generation unit. Alternatively, the DC-AC conversion circuit can convert an alternating current input by an energy storage unit or a power generation unit into a direct current, and then output the direct current to the AC-DC conversion circuit. The AC-DC conversion circuit can convert an input direct current into an alternating current, and then output the alternating current to an alternating current power supply.

In addition, when the power conversion unit in the power conversion system provided in embodiments of this application is connected to the energy storage unit, the power conversion unit may be further disposed as an energy storage converter to be used in the energy storage system.

An embodiment of this application further provides a power update control method. The power update control method is applied to a power conversion system. The power conversion system includes N power conversion units, and N is an integer and N≥2. A first terminal of each power conversion unit is configured to connect to a direct current power supply or an alternating current power supply, and a second terminal of each power conversion unit is configured to connect to a load, an energy storage unit, or a power grid. The power conversion unit is configured to: perform conversion on a direct current input by the direct current power supply or an alternating current input by the alternating current power supply, and then output a current obtained through the conversion. In addition, the power update control method includes: controlling operating modes of one or more target power conversion units in the N power conversion units to be switched between a PR mode and a MPPT mode, and updating a reference power based on a maximum power obtained in the MPPT mode, for an operating power of the target power conversion unit obtained after switching from the MPPT mode to the PR mode to be an updated reference power, where the updated reference power is less than or equal to the maximum power; and controlling an operating mode of a power conversion unit other than the target power conversion unit in the N power conversion units to remain unchanged.

An embodiment of this application further provides a power supply system. The power supply system includes a power conversion system. A first terminal of a power conversion unit in the power conversion system is connected to a direct current power supply or an alternating current power supply, and a second terminal of the power conversion unit is configured to connect to a load, an energy storage unit, a power generation unit, or a power grid. In addition, the power conversion system is configured to: perform conversion on a direct current input by the direct current power supply or an alternating current input by the alternating current power supply, and then output a current obtained through the conversion. The power conversion system is the power conversion system in any one of the foregoing embodiments. According to the power conversion system provided in embodiments of this application, an operating power of the power conversion unit in the PR mode can be updated, and fluctuation of an output power and an output voltage of the power conversion unit can be reduced, so that stability and control precision of the power supply system can be improved.

If the foregoing power supply system can be a photovoltaic system, the power supply system further includes a photovoltaic module. In addition, a first terminal of the power conversion unit in the power conversion system is connected to the photovoltaic module, and the photovoltaic module is used as the direct current power supply.

The foregoing descriptions are merely specific implementations of this application, but are not intended to limit the protection scope of this application. Any variation or replacement readily figured out by a person skilled in the art in the technical scope disclosed in this application shall fall within the protection scope of this application.

## Claims

1. A power conversion system, comprising N power conversion units and a control unit, wherein N is an integer and N≥2, a first terminal of each power conversion unit is configured to connect to a direct current power supply or an alternating current power supply, a second terminal of each power conversion unit is configured to connect to a load, an energy storage unit, or a power grid, and the power conversion unit is configured to: perform conversion on a direct current input by the direct current power supply or an alternating current input by the alternating current power supply, and then output a current obtained through the conversion; and
the control unit is configured to:
control, in a control periodicity, operating modes of one or more target power conversion units in the N power conversion units to be switched between a power reserve, PR mode and a maximum power point tracking, MPPT mode, and update a reference power based on a maximum power obtained in the MPPT mode, for an operating power of the target power conversion unit obtained after switching from the MPPT mode to the PR mode to be an updated reference power, wherein the updated reference power is less than or equal to the maximum power; and
control an operating mode of a power conversion unit other than the target power conversion unit in the N power conversion units to remain unchanged.

2. The power conversion system according to claim 1, wherein the target power conversion unit is one or more power conversion units randomly selected from the N power conversion units.

3. The power conversion system according to claim 1, wherein a probability of selecting at least a part of the power conversion units as the target power conversion unit is different.

4. The power conversion system according to claim 2 or 3, wherein the control unit is further configured to:
obtain a selection probability of each power conversion unit; and
randomly select the target power conversion unit from the N power conversion units based on the selection probability of each power conversion unit.

5. The power conversion system according to claim 4, wherein the control unit is further configured to:
receive a probability adjustment instruction; and
adjust a selection probability of at least a part of the power conversion units based on the probability adjustment instruction.

6. The power conversion system according to any one of claims 1 to 5, wherein the target power conversion unit is one or more power conversion units selected from the N power conversion units in a fixed sequence.

7. The power conversion system according to claim 6, wherein the N power conversion units comprise a first unit group to an M^{th} unit group that are disposed in sequence, any unit group comprises one or more power conversion units, and M is an integer and M≥2;
a plurality of consecutive cycle periodicities comprise one or a combination of a first cycle periodicity and a second cycle periodicity;
in the first cycle periodicity, one unit group sequentially selected based on a sequence from the first unit group to the M^{th} unit group is used as the target power conversion unit; and
in the second cycle periodicity, one unit group sequentially selected based on a sequence from the M^{th} unit group to the first unit group is used as the target power conversion unit.

8. The power conversion system according to claim 7, wherein when the plurality of cycle periodicities comprise the first cycle periodicity and the second cycle periodicity, the first cycle periodicity and the second cycle periodicity occur alternately.

9. The power conversion system according to any one of claims 1 to 8, wherein the updated reference power is equal to a target maximum power minus a reserved power, or the updated reference power is equal to a target maximum power multiplied by a reference percentage; and
the target maximum power is a maximum power in or a maximum power average value of maximum powers of the one or more target power units.

10. The power conversion system according to claim 9, wherein the reserved power is a constant value; or
the reserved power is equal to the target maximum power multiplied by a percentage.

11. The power conversion system according to any one of claims 1 to 10, wherein the operating mode of the power conversion unit other than the target power conversion unit in the N power conversion units is the PR mode, and an operating power of the power conversion unit other than the target power conversion unit is updated with the updated reference power; or
the operating mode of the power conversion unit other than the target power conversion unit in the N power conversion units is the MPPT mode, and an operating power of the power conversion unit other than the target power conversion unit is the maximum power obtained in the MPPT mode; or
in power conversion units other than the target power conversion unit in the N power conversion units, an operating mode of a part of the power conversion units is the PR mode, an operating power of the part of the power conversion units is an updated reserved power, an operating mode of a remaining power conversion unit is the MPPT mode, and an operating power of the remaining power conversion unit is the maximum power obtained in the MPPT mode.

12. A power update control method, wherein the method is applied to a power conversion system, the power conversion system comprises N power conversion units, N is an integer and N≥2, a first terminal of each power conversion unit is configured to connect to a direct current power supply or an alternating current power supply, a second terminal of each power conversion unit is configured to connect to a load, an energy storage unit, or a power grid, and the power conversion unit is configured to: perform conversion on a direct current input by the direct current power supply or an alternating current input by the alternating current power supply, and then output a current obtained through the conversion; and
the method comprises:
controlling operating modes of one or more target power conversion units in the N power conversion units to be switched between a power reserve PR mode and a maximum power point tracking MPPT mode, and updating a reference power based on a maximum power obtained in the MPPT mode, for an operating power of the target power conversion unit obtained after switching from the MPPT mode to the PR mode to be an updated reference power, wherein the updated reference power is less than or equal to the maximum power; and
controlling an operating mode of a power conversion unit other than the target power conversion unit in the N power conversion units to remain unchanged.

13. The power update control method according to claim 12, wherein the target power conversion unit is one or more power conversion units randomly selected from the N power conversion units.

14. The power update control method according to claim 12, wherein a probability of selecting at least a part of the power conversion units as the target power conversion unit is different.
